# EUROPEAN PATENT APPLICATION

(11) **EP 1 617 545 A2**
(43) Date of publication of application: **18.01.2006**
(21) Application number: 05254357.6
(22) Date of filing: 12.07.2005
(51) Int. Cl.: H02K 41/03

(54) **Linear motor for use in machine tool**

(30) Priority: 16.07.2004 JP 2004210485; 16.07.2004 JP 2004210486; 16.07.2004 JP 2004210487; 16.07.2004 JP 2004210488
(71) Applicant: Shin-Etsu Chemical Co., Ltd., Chiyoda-ku, Tokyo (JP)
(72) Inventor: Miyata, Koji Magnetic Mat. Res. & Dev. Center, Takefu-shi Fukui-ken (JP); Uchida, Masanobu Magnetic Mat. Res. & Dev. Center, Takefu-shi Fukui-ken (JP); Ohashi, Ken Magnetic Mat. Res. & Dev. Center, Takefu-shi Fukui-ken (JP)
(74) Representative: Hopley, Joanne Selina

(57) **Abstract**

Provided is a linear motor that improves the processing speed of machine tools, and also provided is a linear motor with significantly reduced cogging force, with which high-speed and high-accuracy processing can be realized. More specifically, provided is a linear motor for use in a machine tool comprising: a stator in which a plurality of permanent magnets having the same shape are mounted on both faces of a plate-like yoke at even intervals such that the permanent magnets have polarities being perpendicular to a direction in which a pair of movers move and alternating in the moving direction; the movers in which armature cores wound with armature coils are disposed such that the armature cores are opposed to the rows of the permanent magnets on the both faces of the stator; and magnetic cores that are disposed on both ends of the movers such that the distance between the magnetic cores and the rows of the permanent magnets is longer than that between the armature cores and the rows of the permanent magnets. Moreover, provided is a laser processing machine in which the above-mentioned permanent magnet type linear motor is used for a three-dimensional moving mechanism.

## Description

### BACKGROUND OF THE INVENTION

### 1. Field of the Invention

The present invention relates to a permanent magnet type linear motor that is used broadly for the purpose of, for example, driving a moving part of a machine tool.

### 2. Description of the Related Art

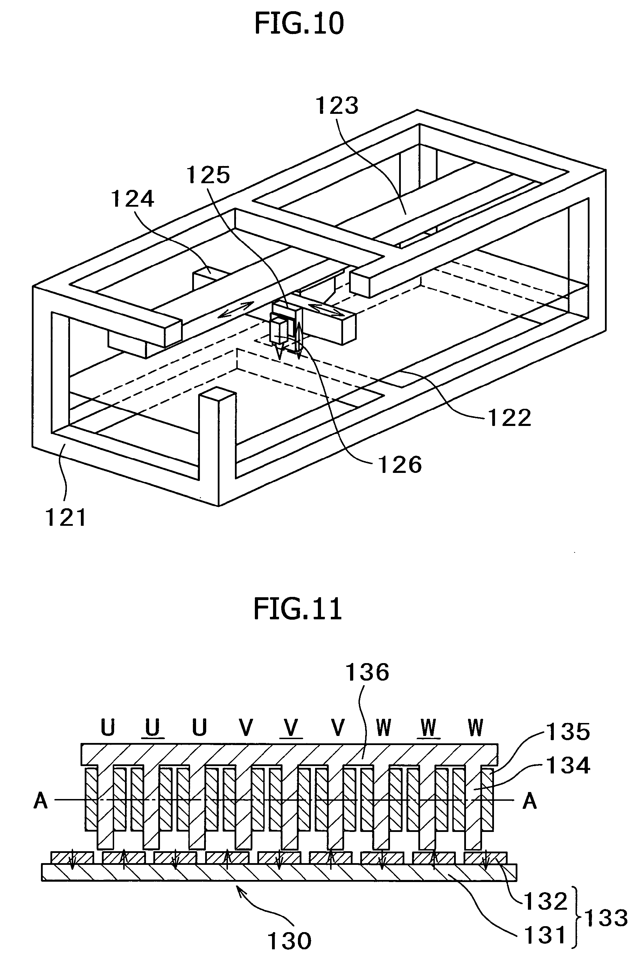

FIG. 10 is a perspective view showing an example of a laser processing machine. There is a table 122 above a frame 121 shown in FIG. 10, and a workpiece (not shown) to be processed is placed on the table 122. Moreover, a driving device 123 that can move in the X-axis direction is mounted above the frame 121, and a driving device 124 that can move in the Y-axis direction is mounted to the X-axis direction driving device 123 via a fitting. A driving device 125 that can move in the Z-axis direction is mounted to the Y-axis direction driving device 124, and a torch 126 for emitting a laser beam is mounted to the Z-axis direction driving device 125. In FIG. 10, the wiring of the driving devices, a control device, and components for delivering the laser beam are omitted. In the laser processing machine, the X- and Y-axis direction driving devices are controlled by the control device to cut the workpiece to a predetermined shape while exposing the workpiece to the laser beam from the torch mounted on the tip. Moreover, in order to focus the laser beam, the distance between the torch and the workpiece is controlled using the Z-axis direction driving device. In conventional laser processing machines, driving devices constituted by a rotary servomotor and a ball screw have been used. However, there have been limitations in high-speed processing, and the limit has been about 20 m/minute at fast forward speed. Furthermore, in the cases of workpieces having a long length of more than 3 m, there has been a problem in that processing accuracy is reduced due to, for example, bending of the ball screw. Thus, replacement of the driving device part by a linear motor has been considered.

Since a machine tool needs a large thrust, a linear motor comprising a stator in which a plurality of permanent magnets are mounted on a plate-like yoke at even intervals such that the polarities of the permanent magnets alternate in a direction in which a mover moves; and the mover that is constituted by armature cores and armature coils and that is opposed to the row of the magnets of the stator is used.

Conventional linear motors associated with the present invention will be described with reference to FIGS. 11 to 16.

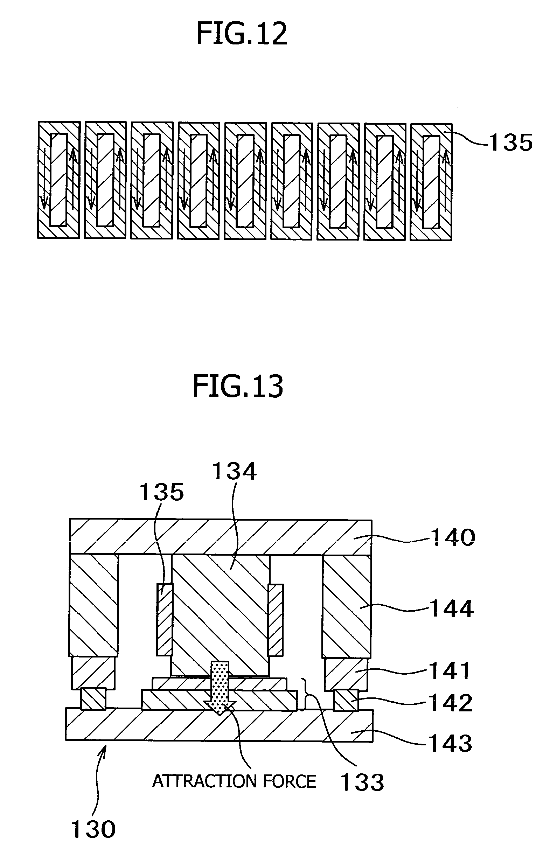

FIG. 11 is a side view of a conventional linear motor 130 of a type in which coils move above a row of a plurality of permanent magnets, and FIG. 12 is a cross-sectional view taken along the line A-A in FIG. 11. As shown in FIG. 11, this conventional linear motor 130 is constituted by a stator 133 in which a plurality of permanent magnets 132 is mounted on an iron plate 131 at even intervals such that the polarities of the permanent magnets are perpendicular to a direction in which a mover 136 moves and alternate in the moving direction, and the mover 136 in which armature coils 135 are wound around armature cores 134 that are made of a magnetic material and that are opposed to the row of the permanent magnets. The armature coils 135 are concentratedly wound around the armature cores 134, and are in the U, V, or W phase for three phase balance.

In the linear motor 130 shown in FIG. 11, eight permanent magnets are opposed to nine armature cores 134, and in order to produce magnetic fields of eight poles by passing a three-phase current through the armature coils 135, the coils in the respective phases are disposed in positions as shown in FIG. 11. If the armature coils 135 are let to produce magnetic fields by controlling the phase of the current with respect to magnetic fields produced by the permanent magnets 132, then the mover 136 that is supported by a retaining mechanism (not shown) moves above the stator 133. Arrows given for the respective permanent magnets 132 in FIG. 11 indicate the magnetization direction, and arrows given for the respective armature coils 135 in FIG. 12 indicate the winding direction.

FIG. 13 shows a cross-sectional view of the conventional linear motor 130 in a state in which the linear motor 130 is supported by the retaining mechanism, when viewed from the moving direction. As shown in FIG. 13, the mover 136 (the armature core 134 around which the armature coil 135 is wound) is fixed to the bottom of a table 140, and LM (Linear Motion) blocks 141 for guiding the mover 136 are fixed to the tips of vertical frames 144 vertically extending from both ends of the bottom of this table 140. The stator 133 is fixed on a base plate 143 of the linear motor, and other LM rails 142 that pair off with the above-mentioned LM blocks 141 are provided on both ends of the base plate 143.

When the linear motor shown in FIG. 11 is incorporated, a very large magnetic attraction force works between the permanent magnets 132 and the armature cores 134, and the magnitude of the force is about several times greater than the rated thrust. Therefore, a large force also works between the LM blocks 141 and the LM rails 142, so that the frictional force becomes very large, and thus there also has been a problem in that the lifetime of the guide is reduced.

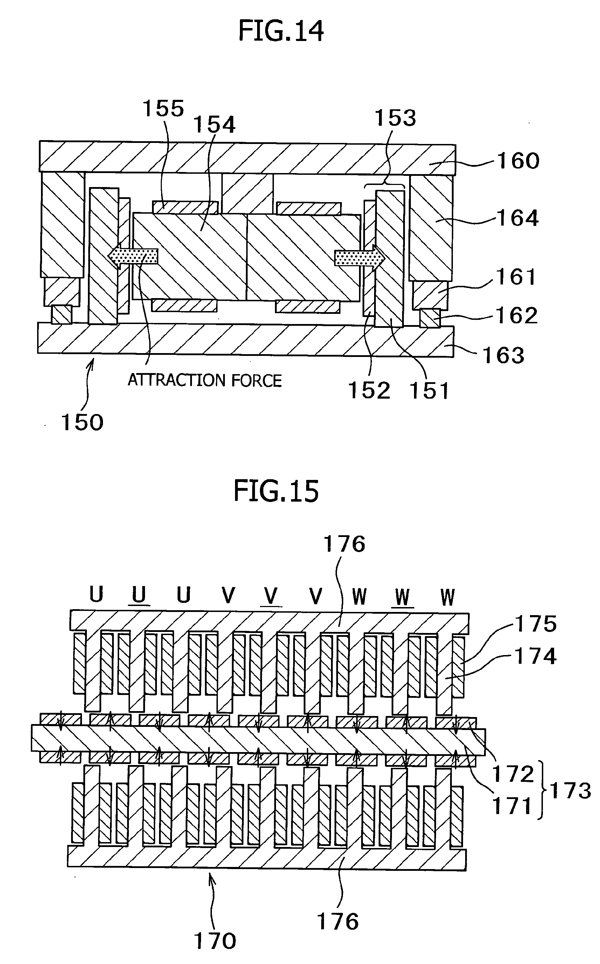

In order to solve this problem, Japanese Patent Application Unexamined Publication No. 10-257750/1998 discloses a linear motor 150 in which, as shown in FIG. 14, two stators 153 (each comprising an iron plate 151 and a permanent magnet 152) are opposed to each other, and a mover 156 (comprising armature cores 154 and armature coils 155) moves between the stators 153. In this manner, the attraction forces between the mover and the magnet rows cancel each other out, and thus the load on the mover guide can be reduced. However, in the configuration shown in FIG. 14, the iron plate 151 of each stator is required to have a certain amount of thickness in order to make the iron plate upright with high accuracy so that the iron plate 151 is thicker than the iron plate in FIG. 13. Moreover, the size of a base plate 163 is increased, and therefore the weight of the entire driving device is increased. As has been described with the laser processing machine in FIG. 10, the Y-axis direction driving device and the Z-axis direction driving device are mounted on the X-axis direction driving device, so that if the weight of the driving device is increased, then the thrust has to be increased to obtain the same acceleration, resulting in an increase in the size of the driving device. Thus, it is desired to reduce the weight of the driving device (linear motor). In order to reduce the weight of the linear motor, it is effective to reduce the weights of the stator and the base plate of the driving device that are disposed throughout the entire driving region. It should be noted that FIG. 14 also shows a table 160, LM blocks 161, LM rails 162, the base plate 163, and vertical plates 164.

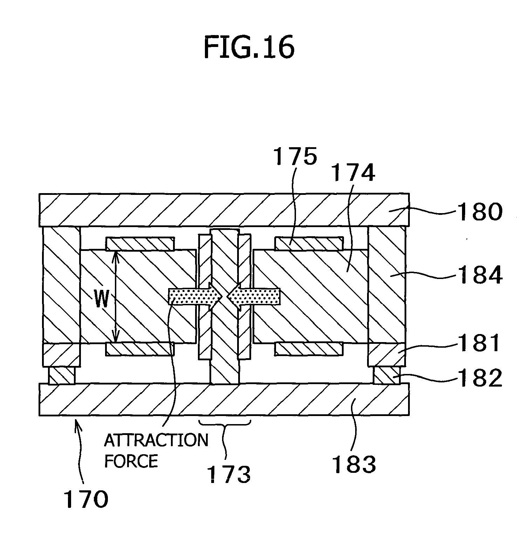

Thus, a linear motor 170 disclosed in Japanese Patent Application Unexamined Publication No. 2002-34231 and shown in FIG. 15 is constituted by a stator 173 in which a plurality of permanent magnets 172 are mounted on a single iron plate 171 at even intervals such that the polarities of the permanent magnets alternate in a direction in which movers 176 move, and the movers 176 in which armature coils 175 are wound around respective armature cores (magnetic cores) 174 that are made of a magnetic material and that are opposed to the rows of these permanent magnets. The winding method of the armature coils 175 is the same as in the conventional linear motor 130. FIG. 16 is a cross-sectional view of the above-mentioned linear motor 170 in a state in which the linear motor is supported by the retaining mechanism, when viewed from the moving direction. FIG. 16 also shows a table 180, LM blocks 181, LM rails 182, a base plate 183, and vertical plates 184. The thickness of the iron plate of the linear motor 170 in FIG. 16 is almost the same as that of the linear motor 150 in FIG. 14, and the number of iron plates in the linear motor 170 is smaller than that in the linear motor 150 by one, so that the weight of the entire linear motor is reduced.

With the conventional linear motor 170 that is thus designed, a high thrust can be obtained, but an attraction force works between the permanent magnets and the magnetic cores in the moving direction even when the current is not passing through the coils. This is referred to as "cogging". If the cogging is large, then position control of the linear motor is not performed appropriately, and thus there has been a problem in that the processing accuracy of the laser processing machine deteriorates.

### SUMMARY OF THE INVENTION

It is an object of the present invention to provide a linear motor with which the processing accuracy of machine tools is improved, and also to provide a linear motor with significantly reduced cogging force, with which high-speed and high-accuracy processing can be realized.

A first aspect of the present invention provides a linear motor for use in a machine tool comprising: a stator in which a plurality of permanent magnets having the same shape are mounted on both faces of a plate-like yoke at even intervals such that the permanent magnets have polarities being perpendicular to a direction in which a pair of movers move and alternating in the moving direction; the movers in which armature cores wound with armature coils are disposed such that the armature cores are opposed to the rows of the permanent magnets on the both faces of the stator; and magnetic cores that are disposed on both ends of the movers and that are disposed such that the distance between the magnetic cores and the rows of the permanent magnets is longer than the distance between the armature cores and the rows of the permanent magnets.

The magnetic cores may be referred to as "auxiliary cores", and the armature cores may be referred to as "main cores".

A second aspect of the present invention provides a linear motor for use in a machine tool comprising: a stator in which a plurality of permanent magnets having the same shape are mounted on both faces of a plate-like yoke at even intervals such that the permanent magnets have polarities being perpendicular to a direction in which a pair of movers move and alternating in the moving direction; and the movers in which armature cores wound with armature coils are disposed such that the armature cores are opposed to the rows of the permanent magnets on the both faces of the stator, wherein each of the movers comprises two mover blocks, each bock having a length that is eight times longer than a magnet pitch τ, which is the sum of the width of each of the permanent magnets and the gap distance between adjacent permanent magnets, and having nine armature cores wound with the armature coils in U, V, and W phases of three each, and wherein the length of a spacing between the two blocks is set to be 1/2 of the magnet pitch τ.

A third aspect of the present invention provides a linear motor for use in a machine tool comprising: a stator in which a plurality of permanent magnets having the same shape are mounted on both faces of a plate-like yoke at even intervals such that the permanent magnets have polarities being perpendicular to a direction in which a pair of movers move and alternating in the moving direction; and the movers in which armature cores wound with armature coils are disposed such that the armature cores are opposed to the rows of the permanent magnets on the both faces of the stator, wherein each of the movers comprises three mover blocks, each block having a length that is eight times longer than a magnet pitch τ, which is the sum of the length of each of the permanent magnets and the gap distance between adjacent permanent magnets, and having nine armature cores wound with the armature coils in U, V, and W phases of three each, and wherein the length of a spacing between adjacent blocks is set to be 1/3 of the magnet pitch τ.

A fourth aspect of the present invention provides a linear motor for use in a machine tool comprising: a stator in which a plurality of permanent magnets having the same shape are mounted on both faces of a plate-like yoke at even intervals such that the permanent magnets have polarities being perpendicular to a direction in which a pair of movers move and alternating in the moving direction; and the movers in which armature cores wound with armature coils are disposed such that the armature cores are opposed to the rows of the permanent magnets on the both faces of the stator, wherein each of the movers comprises three mover blocks, each block having a length that is eight times longer than a magnet pitch τ, which is the sum of the length of each of the permanent magnets and the gap distance between adjacent permanent magnets, and having nine armature cores wound with the armature coils in U, V, and W phases of three each, and wherein the length of a spacing between adjacent blocks is set to be 2/3 of the magnet pitch τ.

Moreover, the present invention provides laser processing machines in which these permanent magnet type linear motors are used for a three-dimensional moving mechanism. The present invention provides a machine tool comprising the linear motor. Examples of the machine tool may include MC (machining center) and an electric discharge machine.

According to the first aspect of the present invention, by disposing the magnetic cores (auxiliary cores) on both ends of the movers and by making the length of the magnetic cores shorter than that of the armature cores (main cores), the cogging force can be significantly reduced, and thus high-accuracy processing becomes possible.

According to the second aspect of the present invention, by disposing the two mover blocks, each block having a length that is eight times longer than the stator magnet pitch and having nine teeth (armature cores) wound with the armature coils in the respective phases of three each, and by setting the spacing between the blocks to be 1/2 of the stator magnet pitch, the cogging force can be significantly reduced, and thus high-accuracy processing becomes possible.

According to the third aspect of the present invention, by disposing the three mover blocks, each block having a length that is eight times longer than the stator magnet pitch and having nine teeth (armature cores) wound with the armature coils in the respective phases of three each, and by setting the spacing between adjacent blocks to be 1/3 of the stator magnet pitch, the cogging force can be significantly reduced, and thus high-accuracy processing becomes possible.

According to the fourth aspect of the present invention, by disposing the three mover blocks, each block having a length that is eight times longer than the stator magnet pitch and having nine teeth (armature cores) wound with the armature coils in the respective phases of three each, the cogging force can be significantly reduced, and thus high-accuracy processing becomes possible.

### BRIEF DESCRIPTION OF THE DRAWINGS

FIG. 1 is a diagram for explaining a linear motor according to an embodiment of the first aspect of the present invention.
FIG. 2 is a diagram for explaining a waveform of a cogging force.
FIG. 3 is a diagram for explaining a linear motor according to an embodiment of the second aspect of the present invention.
FIG. 4 is a diagram for explaining waveforms of the cogging force of the present example and a conventional example.
FIG. 5 is a diagram for explaining a linear motor according to an embodiment of the third aspect of the present invention.
FIG. 6 is a diagram for explaining waveforms of the cogging force of the present example and the conventional example.
FIG. 7 is a diagram for explaining a linear motor according to an embodiment of the fourth aspect of the present invention.
FIG. 8 is a diagram for explaining waveforms of the cogging force of the present example and the conventional example.
FIG. 9 is a diagram for explaining the size of an auxiliary core and the cogging force of the present example.
FIG. 10 is a diagram for explaining a laser processing machine.
FIG. 11 is a cross-sectional view for explaining the relationship between a mover and a stator in a conventional linear motor.
FIG. 12 is a cross-sectional view taken along the line A-A in FIG. 11.
FIG. 13 is a diagram for explaining a retaining mechanism of the linear motor in FIG. 11.
FIG. 14 is a diagram for explaining a conventional linear motor in which magnetic attraction forces cancel each other out.
FIG. 15 is a diagram for explaining the relationship between movers and a stator of a conventional linear motor in which magnetic attraction forces cancel each other out.
FIG. 16 is a diagram for explaining a retaining mechanism of the linear motor in FIG. 15.

### DETAILED DESCRIPTION OF THE PREFERRED EMBODIMENTS

Examples of the permanent magnets that are used in the present invention include, but not particularly limited to, Nd- and Sm-based magnets. The orientation of the magnets is perpendicular to the plate-like yoke.

There is no particular limitation regarding the magnetic cores (auxiliary cores) and the armature cores (main cores) that are used in the present invention, as long as the cores are magnetic, but it is preferable that the auxiliary cores and the main cores are formed into one piece. That is to say, although the auxiliary cores may be made of the same material as the main cores or a different material from that of the main cores, it is preferable that the auxiliary cores are made of the same material as the main cores and can be obtained integrally with the main cores. However, the auxiliary cores are not wound with coils. Specific examples of the material of the auxiliary cores include magnetic materials such as silicon steel, low carbon steel, and magnetic stainless steel.

According to the present invention, the auxiliary cores that are disposed on both ends of the rows of the movers are shorter than the inner main cores, and the difference in length between the auxiliary cores and the inner main cores is preferably 5 mm or more and more preferably 6 to 15 mm. The length of the magnetic cores is as described above, and the cross-sectional shape of the magnetic cores is preferably, but not particularly limited to, rectangular or trapezoid.

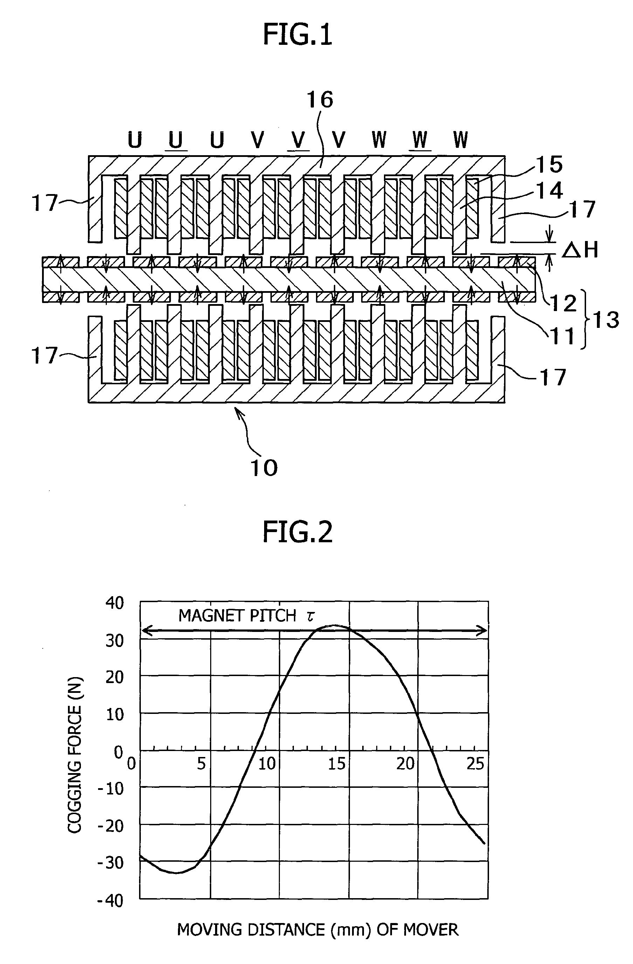

FIG. 1, which is a diagram for explaining an embodiment according to the first aspect of the present invention, is a vertical sectional view of a central portion of a linear motor. As shown in FIG. 1, a linear motor 10 of the present invention comprises a stator 13 in which a plurality of permanent magnets 12 are mounted on a single plate-like yoke (e.g., iron plate) 11 at even intervals such that the polarities of the permanent magnets are perpendicular to a direction in which a pair of movers 16 move and alternate in the moving direction; and the movers 16 in which armature coils 15 are wound around respective armature cores (magnetic cores) 14 that are made of a magnetic material and that are opposed to the rows of these permanent magnets. On both ends of each row of the armature cores 14, magnetic cores 17 having the same tooth width as the armature cores 14 and a smaller tooth height than the armature cores 14 are mounted. The winding method of the armature coils 15 is the same as in the conventional linear motor 170.

Referring to FIG. 2, the relationship between the size of the auxiliary core of the linear motor according to the first aspect of the present invention and the cogging force will be described.

As shown in FIG. 2, the cogging force of the linear motor is a force that works periodically when the movers move, in the traveling direction of the movers or the opposite direction, and one cycle of the cogging force corresponds to the pitch of the magnets. The total of the magnetic attraction forces that are generated between the magnets and the teeth of the armature cores is the cogging force. Although the magnetic attraction forces that are generated at the teeth inside the armature cores cancel each other out, the magnetic attraction forces that are generated at both ends of the armature cores do not cancel each other out sufficiently, and thus these forces appear as the cogging force having a cycle corresponding to the magnet pitch.

Therefore, if the magnetic flux distribution at both ends of the armature cores is adjusted appropriately, then the cogging force can be reduced. That is, according to the present invention, by providing the auxiliary cores and by adjusting the magnetic flux distribution by changing the difference ΔH between a face of the auxiliary cores and that of the main cores, the cogging force can be reduced.

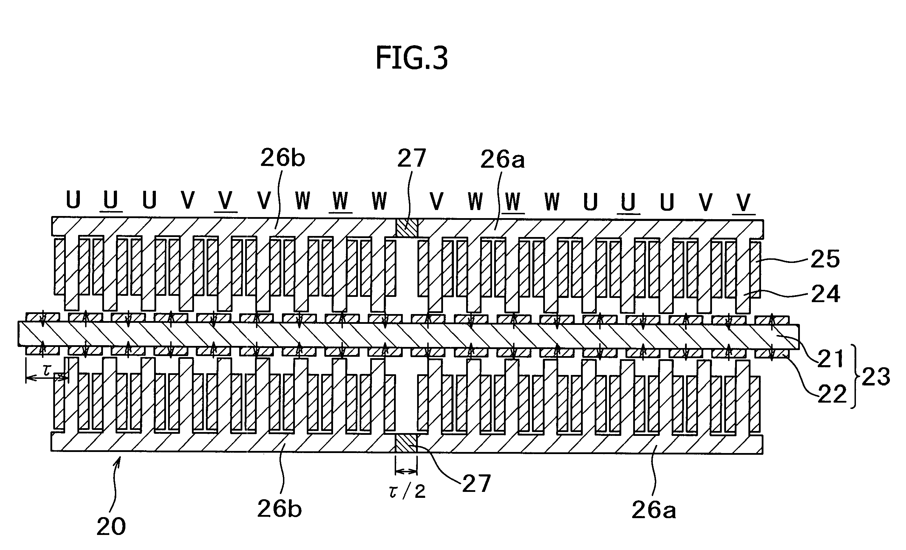

An embodiment according to the second aspect of the present invention will be described with reference to FIG. 3.

FIG. 3, which is a diagram for explaining the embodiment according to the second aspect of the present invention, is a vertical sectional view of a central portion of a linear motor. As shown in FIG. 3, a linear motor 20 of the present invention comprises a stator 23 in which a plurality of permanent magnets 22 are mounted on a single yoke (e.g., iron plate) 21 at even intervals such that the polarities of the permanent magnets are perpendicular to a direction in which a pair of movers 26 move and alternate in the moving direction; and the movers 26 (each including mover blocks 26a and 26b) in which armature coils 25 are wound around respective armature cores (magnetic cores) 24 that are made of a magnetic material and that are opposed to the rows of these permanent magnets.

Each mover block has a length that is eight times longer than the stator magnet pitch, and nine teeth (armature cores) of the mover. The two mover blocks are serially disposed in the traveling direction, and preferably a spacer 27 having a size that is 1/2 of the stator magnet pitch is inserted between the two blocks (between the armature coils). However, it is also possible that there is a space having a length that is 1/2 of the magnet pitch between the two blocks.

The material of the spacer 27 is preferably a non-magnetic material, such as non-magnetic stainless steel or aluminum, so as to eliminate magnetic interference between the two mover blocks. There is no particular limitation regarding the shape of the spacer, but the shape of a rectangular parallelepiped block is preferable. Examples of the method for connecting the spacer to each mover block include a method of fixing the spacer with an adhesive and a method of providing another frame and mechanically fixing the spacer in conjunction with the mover to that frame.

Regarding the winding method of the armature coils 25, it is sufficient that the coils in the U, V, and W phases are disposed such that the total number of coils of each phase is three, and the arrangement of the U, V, and W phases can be chosen as appropriate. For example, if, in the first block, U, V, and W phase coils of three each are concentratedly wound around teeth in this order from the left tooth in the drawing, then, in the second block, a V phase coil is wound around the first tooth, W and U phase coils of three each are wound around teeth in this order from the second tooth, and two V phase coils are wound around the last two teeth.

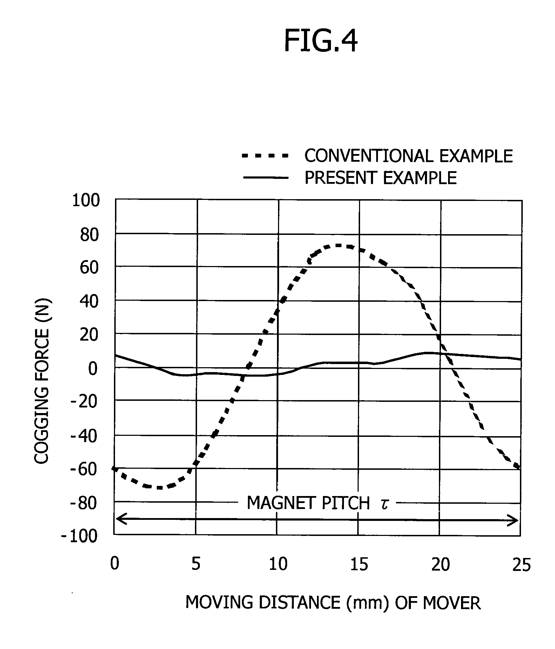

Referring to FIG. 4, the cogging force of the linear motor 20 in FIG. 3 having a pair of movers each constituted by two mover blocks, with the spacing between the two mover blocks being 1/2 of the magnet pitch, will be described.

In FIG. 4, the cogging force of the linear motor 170 of the conventional example in which each of the movers comprises a single block in the traveling direction in FIG. 14 is shown by a broken line. The cogging force is a force that works periodically when the movers move, in the traveling direction of the movers or the opposite direction, and one cycle of the cogging force corresponds to the magnet pitch. In this case, the difference between the maximum and minimum points is 144 N. When the linear motor 170 of the conventional example is provided with movers having cogging forces whose waveforms have phases that are shifted by 180°, the cogging forces cancel each other out due to synthesis of the waveforms. Therefore, it is believed that the cogging force can be significantly reduced according to the present invention in which the spacing between the blocks is set to be 1/2 of the stator magnet pitch.

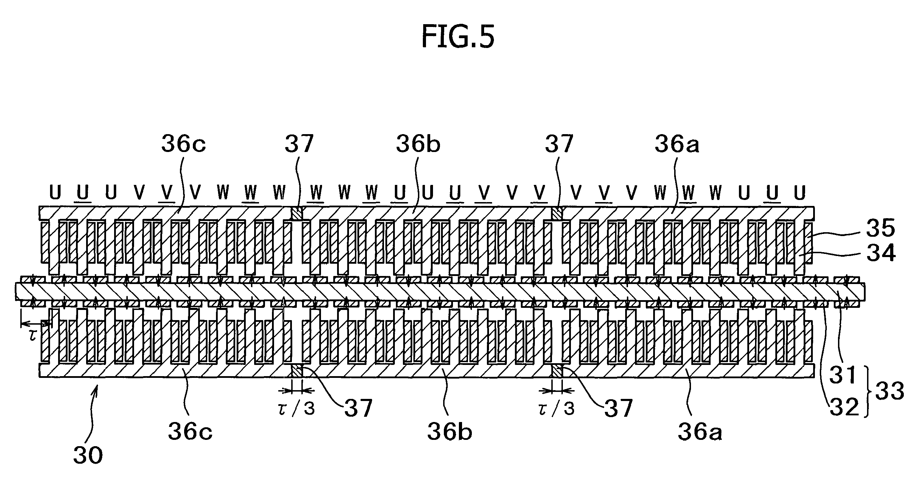

An embodiment according to the third aspect of the present invention will be described with reference to FIG. 5.

FIG. 5, which is a diagram for explaining the embodiment of the present invention, is a vertical sectional view of a central portion of a linear motor. As shown in FIG. 5, a linear motor 30 of the present invention comprises a stator 33 in which a plurality of permanent magnets 32 are mounted on a single yoke (e.g., iron plate) 31 at even intervals such that the polarities of the permanent magnets are perpendicular to a direction in which a pair of movers 36 move and alternate in the moving direction, and the movers 36 (each including mover blocks 36a to 36c) in which armature coils 35 are wound around respective armature cores (magnetic cores) 34 that are made of a magnetic material and that are opposed to the rows of these permanent magnets.

Each mover block has a length that is eight times longer than the stator magnet pitch, and nine teeth (armature cores) of the mover. The three mover blocks are serially disposed in the traveling direction, and preferably a spacer 37 having a size that is 1/3 of the stator magnet pitch is inserted between adjacent blocks (between the armature coils). However, it is also possible that there is a space having a length that is 1/3 of the magnet pitch between adjacent blocks.

The material of the spacer 37 is preferably a non-magnetic material, such as non-magnetic stainless steel or aluminum, so as to eliminate magnetic interference between the three mover blocks. There is no particular limitation regarding the shape of the spacer, but the shape of a rectangular parallelepiped block is preferable. Examples of the method for connecting the spacer to each mover block include a method of fixing the spacer with an adhesive and a method of providing another frame and mechanically fixing the spacer in conjunction with the mover to that frame.

Regarding the winding method of the armature coils 35, it is sufficient that the coils in the U, V, and W phases are disposed such that the total number of coils of each phase is three, and the arrangement of the U, V, and W phases can be chosen as appropriate. For example, if, in the first block, U, V, and W phase coils of three each are concentratedly wound around teeth in this order from the left tooth in the drawing, then W, U, and V phase coils of three each are wound around teeth in the second block in this order from the left tooth, and V, W, and U phase coils of three each are wound around teeth in the third block in this order from the left tooth.

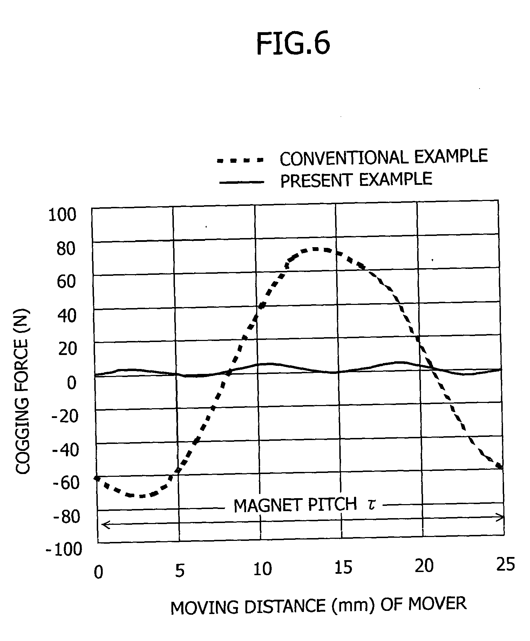

Referring to FIG. 6, the cogging force of the linear motor 30 in FIG. 5 having a pair of movers each comprising three mover blocks, with the spacing between adjacent blocks being 1/3 of the magnet pitch, will be described.

In FIG. 6, the cogging force of the linear motor 170 of the conventional example in which each of the movers comprises a single block in the traveling direction in FIG. 14 is shown by a broken line. The cogging force is a force that works periodically when the movers move, in the traveling direction of the movers or the opposite direction, and one cycle of the cogging force corresponds to the magnet pitch. In this case, the difference between the maximum and minimum points is 144 N. If the linear motor 170 of the conventional example is provided with two movers having cogging forces whose waveforms have phases that are shifted by 120°, then the cogging forces cancel each other out due to synthesis of the waveforms. Therefore, it is believed that the cogging force can be significantly reduced according to the present invention in which the spacing between adjacent blocks is set to be 1/3 of the stator magnet pitch.

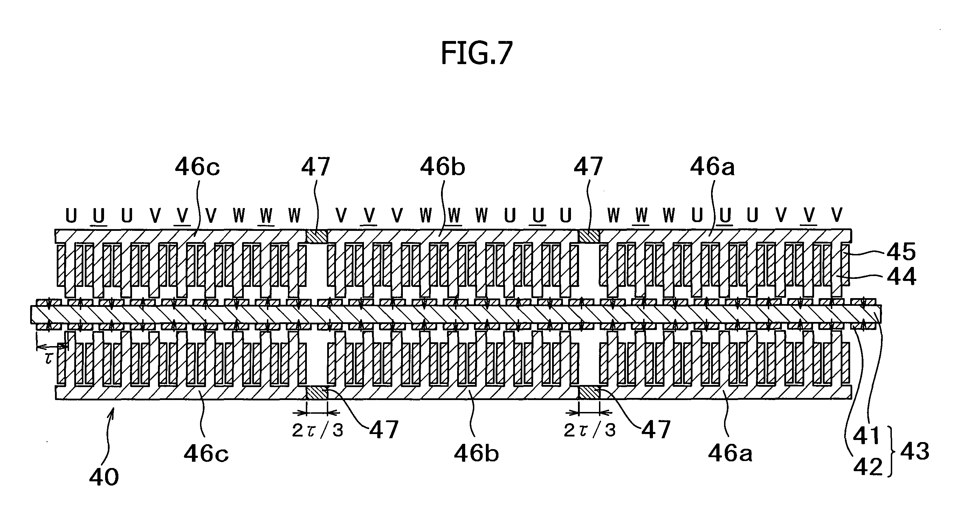

An embodiment according to the fourth aspect of the present invention will be described with reference to FIG. 7.

FIG. 7, which is a diagram for explaining the embodiment of the present invention, is a vertical sectional view of a central portion of a linear motor. As shown in FIG. 7, a linear motor 40 of the present invention comprises a stator 43 in which a plurality of permanent magnets 42 are mounted on a single yoke (e.g., iron plate) 41 at even intervals such that the polarities of the permanent magnets are perpendicular to a direction in which a pair of movers 46 move and alternate in the moving direction, and the movers 46 (each including mover blocks 46a to 46c) in which armature coils 45 are wound around respective armature cores (magnetic cores) 44 that are made of a magnetic material and that are opposed to the rows of these permanent magnets.

Each mover block has a length that is eight times longer than the stator magnet pitch, and nine teeth (armature cores) of the mover. The three mover blocks are serially disposed in the traveling direction, and preferably a spacer 47 having a size that is 2/3 of the stator magnet pitch is inserted between adjacent blocks (between the armature coils). However, it is also possible that there is a space having a length that is 2/3 of the magnet pitch between adjacent blocks.

The material of the spacer 47 is preferably a non-magnetic material, such as non-magnetic stainless steel or aluminum, so as to eliminate magnetic interference between the three mover blocks. There is no particular limitation regarding the shape of the spacer, but the shape of a rectangular parallelepiped block is preferable. Examples of the method for connecting the spacer to each mover block include a method of fixing the spacer with an adhesive and a method of providing another frame and mechanically fixing the spacer in conjunction with the mover to that frame.

Regarding the winding method of the armature coils 45, it is sufficient that the coils in the U, V, and W phases are disposed such that the total number of coils of each phase is three, and the arrangement of the U, V, and W phases can be chosen as appropriate. For example, if, in the first block, U, V, and W phase coils of three each are concentratedly wound around teeth in this order from the left tooth in the drawing, then V, W, and U phase coils of three each are wound around teeth in the second block in this order from the left tooth, and W, U, and V phase coils of three each are wound around teeth in the third block in this order from the left tooth.

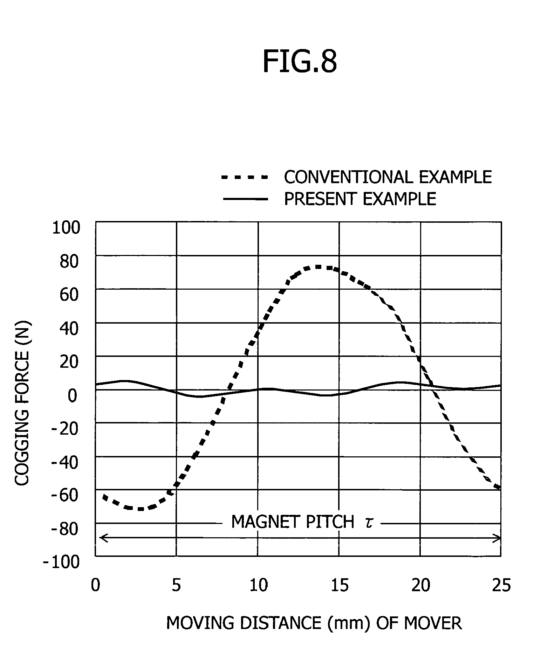

Referring to FIG. 8, the cogging force of the linear motor 40 in FIG. 7 having a pair of movers each comprising three mover blocks, with the spacing between adjacent blocks being 2/3 of the magnet pitch, will be described.

In FIG. 8, the cogging force of the linear motor 170 of the conventional example in which each of the movers comprises a single block in the traveling direction in FIG. 14 is shown by a broken line. The cogging force is a force that works when the movers move, in the traveling direction of the movers or the opposite direction, and one cycle of the cogging force corresponds to the magnet pitch. In this case, the difference between the maximum and minimum points is 144 N. If the linear motor 170 of the conventional example is provided with two movers having cogging forces whose waveforms have phases that are shifted by 240°, then the cogging forces cancel each other out due to synthesis of the waveforms. Therefore, it is believed that the cogging force can be significantly reduced according to the present invention in which the spacing between adjacent blocks is set to be 2/3 of the stator magnet pitch.

According to the present invention including the first to fourth aspects, the linear motor in which the auxiliary cores are provided as described above can be applied to a laser processing machine in which the linear motor is used for a three-dimensional moving mechanism in X-, Y-, and Z-axis directions. With the laser processing machine of the present invention, unevenness in the thrust is eliminated due to a reduction in the cogging force, and position control accuracy is increased, and thus high-speed and high-accuracy processing can be performed.

Hereinafter, the present invention will be described based on examples, but the present invention is not limited to these examples.

### Example 1

Auxiliary cores were provided as shown in FIG. 1, and the magnetic flux distribution was adjusted by changing the difference ΔH between the face of the auxiliary cores and that of main cores. A Nd-Fe-B based permanent magnet was used, and an iron yoke was used for the main cores and the auxiliary cores. Regarding the section sizes in FIG. 1, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke was 19 mm. The gap between the movers and the stator magnets was 1 mm. The movers and the stator had a thickness of 50 mm in the cross-sectional direction. It should be noted that the magnet pitch (τ) was the sum of the width of each of the permanent magnets and the gap distance between adjacent permanent magnets.

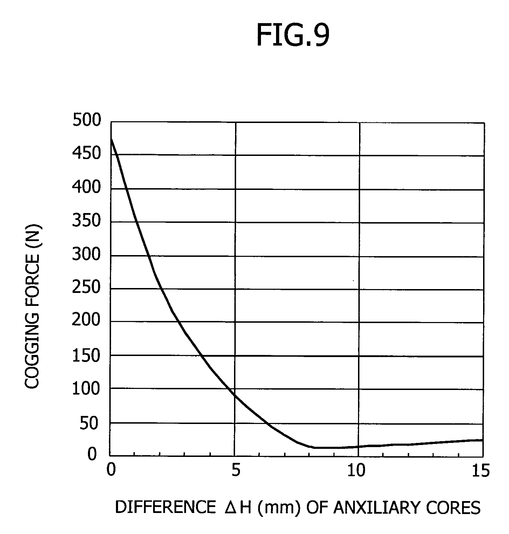

FIG. 9 shows the results. As shown in FIG. 9, as the difference ΔH in length increases, the cogging force decreases, and when ΔH=8mm, the cogging force was the minimum value, 15 N. When the difference ΔH in length was increased so that there were no auxiliary cores (ΔH=34mm), the cogging force was 66 N. Thus, the cogging force could be reduced by adjusting the size H of the auxiliary cores.

The linear motor provided with the auxiliary cores as described above could be applied to a laser processing machine in which the linear motor was used for a three-dimensional moving mechanism in X-, Y-, and Z-axis directions.

### Example 2

As shown in FIG. 3, a second mover block was disposed with a spacing that is 1/2 of the magnet pitch, which corresponded to 180° of the waveform of the cogging force. A Nd-Fe-B based permanent magnet was used, and an iron yoke was used as the core material. Here, regarding the section sizes in FIG. 3, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke (iron plate) was 19 mm. The gap between the movers and the stator magnets was 1 mm. The width of the spacer (non-magnetic stainless steel, SUS 304) between the first and second blocks was 12.5 mm. The movers and the stator had a thickness of 50 mm in the cross-sectional direction. It should be noted that the sizes in the conventional example in FIG. 14 are set to be the same as those in this example except that the mover and the stators have a thickness of 100 mm in the cross-sectional direction so as to provide the same thrust as in the present invention.

As shown by a solid line in FIG. 4, the cogging force of the present invention was reduced, and the difference between the maximum and minimum points was 17 N. Thus, by disposing the two blocks of the mover cores with a spacing that is 1/2 of the magnet pitch between the two blocks, the cogging force could be reduced.

The linear motor provided above could be applied to a laser processing machine in which the linear motor was used for a three-dimensional moving mechanism in X-, Y-, and Z-axis directions.

### Example 3

As shown in FIG. 5, second and third mover blocks were disposed with a spacing that is 1/3 of the magnet pitch, which corresponds to 120° of the waveform of the cogging force. A Nd-Fe-B based permanent magnet was used, and an iron yoke was used as the core material. Here, regarding the section sizes in FIG. 5, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke was 19 mm. The gap between the movers and the stator magnets was 1 mm. The width of the spacers (non-magnetic stainless steel, SUS 304) between the first and second blocks and between the second and third blocks was 8.33 mm. The movers and the stator had a thickness of 33 mm in the cross-sectional direction. It should be noted that the sizes in the conventional example in FIG. 14 are set to be the same as those in this example except that the mover and the stators have a thickness of 100 mm in the cross-sectional direction so as to provide the same thrust as in the present invention.

As shown by a solid line in FIG. 6, the cogging force of the present invention was reduced, and the difference between the maximum and minimum points was 11 N. Thus, by disposing the three blocks of the mover cores with a spacing that is 1/3 of the magnet pitch between adjacent blocks, the cogging force could be reduced.

The linear motor provided above could be applied to a laser processing machine in which the linear motor was used for a three-dimensional transfer mechanism in X-, Y-, and Z-axis directions.

### Example 4

As shown in FIG. 7, second and third mover blocks were disposed with a spacing that is 2/3 of the magnet pitch, which corresponds to 240° of the waveform of the cogging form. A Nd-Fe-B based magnet was used, and an iron yoke was used for the core material. Here, regarding the section sizes in FIG. 7, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke was 19 mm. The gap between the movers and the stator magnets was 1 mm. The width of the spacers (non-magnetic stainless steel, SUS 304) between the first and second blocks and between the second and third blocks was 16.7 mm. The movers and the stator had a thickness of 33 mm in the cross-sectional direction. It should be noted that the sizes in the conventional example in FIG. 14 are set to be the same as those in this example except that the mover and the stators have a thickness of 100 mm in the cross-sectional dimension so as to provide the same thrust as in the present invention.

As shown by a solid line in FIG. 8, the cogging force of the present invention was reduced, and the difference between the maximum and minimum points was 10 N. Thus, by disposing the three blocks of the mover cores with a spacing that is 2/3 of the magnet pitch between adjacent blocks, the cogging force could be reduced.

The linear motor provided above could be applied to a laser processing machine in which the linear motor was used for a three-dimensional moving mechanism in X-, Y-, and Z-axis directions.

## Claims

1. A linear motor for use in a machine tool comprising:
a stator in which a plurality of permanent magnets having the same shape are mounted on both faces of a plate-like yoke at even intervals such that the permanent magnets have polarities being perpendicular to a direction in which a pair of movers move and alternating in the moving direction;
the movers in which armature cores wound with armature coils are disposed such that the armature cores are opposed to rows of the permanent magnets on the both faces of the stator, and
magnetic cores that are disposed on both ends of the movers such that the distance between the magnetic cores and the rows of the permanent magnets is longer than that between the armature cores and the rows of the permanent magnets.

2. The linear motor for use in a machine tool according to claim 1, wherein the distance between the magnetic cores and the rows of the permanent magnets is longer than the distance between the armature cores and the rows of the permanent magnets by 5 mm or more.

3. A linear motor for use in a machine tool comprising:
a stator in which a plurality of permanent magnets having the same shape are mounted on both faces of a plate-like yoke at even intervals such that the permanent magnets have polarities being perpendicular to a direction in which a pair of movers move and alternating in the moving direction; and
the movers in which armature cores wound with armature coils are disposed such that the armature cores are opposed to rows of the permanent magnets on the both faces of the stator,
wherein each of the movers comprises two mover blocks, each block having a length that is eight times longer than a magnet pitch τ, which is the sum of the width of each of the permanent magnets and the gas distance between adjacent permanent magnets, and having nine armature cores wound with the armature coils in U, V, and W phases of three each, and
wherein the length of a spacing between the two blocks is set to be 1/2 of the magnet pitch τ.

4. The linear motor for use in a machine tool according to claim 3, further comprising a non-magnetic spacer between said two blocks in order to set said length of the spacing between the two blocks to be 1/2 of the magnet pitch τ.

5. A linear motor for use in a machine tool comprising:
a stator in which a plurality of permanent magnets having the same shape are mounted on both faces of a plate-like yoke at even intervals such that the permanent magnets have polarities being perpendicular to a direction in which a pair of mover moves and alternating in the moving direction; and
the movers in which armature cores wound with armature coils are disposed such that the armature cores are opposed to rows of the permanent magnets on the both faces of the stator,
wherein each of the movers comprises three mover blocks, each block having a length that is eight times longer than a magnet pitch τ, which is the sum of the length of each of the permanent magnets and the gap distance between adjacent permanent magnets, and having nine armature cores wound with the armature coils in U, V, and W phases of three each, and
wherein the length of a spacing between adjacent blocks is set to be 1/3 of the magnet pitch τ.

6. The linear motor for use in a machine tool according to claim 5, further comprising a non-magnetic spacer between adjacent blocks in order to set the length of the spacing between adjacent blocks to be 1/3 of the magnet pitch τ.

7. A linear motor for use in a machine tool comprising:
a stator in which a plurality of permanent magnets having the same shape are mounted on both faces of a plate-like yoke at even intervals such that the permanent magnets have polarities being perpendicular to a direction in which a pair of mover moves and alternating in the moving direction; and
the movers in which armature cores wound with armature coils are disposed such that the armature cores are opposed to rows of the permanent magnets on the both faces of the stator,
wherein each of the movers comprises three mover blocks, each block having a length that is eight times longer than a magnet pitch τ, which is the sum of the length of each of the permanent magnets and the gap distance between adjacent permanent magnets, and having nine armature cores wound with the armature coils in U, V, and W phases of three each, and
wherein the length of a spacing between adjacent blocks is set to be 2/3 of the magnet pitch τ.

8. The linear motor for use in a machine tool according to claim 7, wherein the linear motor comprises a non-magnetic spacer between adjacent blocks in order to set the length of the spacing between adjacent blocks to be 2/3 of the magnet pitch r.

9. A laser processing machine in which the linear motor for use in a machine tool according to any one of claims 1 to 8 is used for a three-dimensional moving mechanism.

10. A machine tool comprising the linear motor according to any one of claims 1 to 8.
